# Europäisches Patentamt
## European Patent Office
## Office européen des brevets

(19)

(11) Veröffentlichungsnummer: **0 193 134**
**A2**

(12) # EUROPÄISCHE PATENTANMELDUNG

(21) Anmeldenummer: **86102289.5**

(22) Anmeldetag: **21.02.86**

(51) Int. Cl.⁴: **H04Q 11/04 , H04M 11/06**

(30) Priorität: **25.02.85 US 705460**

(43) Veröffentlichungstag der Anmeldung:
**03.09.86 Patentblatt 86/36**

(84) Benannte Vertragsstaaten:
**CH DE FR GB IT LI NL SE**

(71) Anmelder: **International Standard Electric
Corporation
320 Park Avenue
New York New York 10022(US)**

(72) Erfinder: **Yanosy, John Anthony, Jr.
60 Russell Road
Stratford, CT 06497(US)**
Erfinder: **Odlyzko, Paul
71 C Riverbend Road
Stratford, CT 06497(US)**
Erfinder: **Vij, Jitender Kumar
353 Putting Green Road
Trumbull, CT 06611(US)**
Erfinder: **Dennett, Anthony John
22 White Oak Road
Shelton, CT 06484(US)**
Erfinder: **Hufnagel, John Peter
950 Bullet Hill Road
Southbury, CT 06488(US)**

(74) Vertreter: **Villinger, Bernhard, Dipl.-Ing. et al
Standard Elektrik Lorenz AG Patent- und
Lizenzwesen Postfach 300 929 Kurze Strasse 8
D-7000 Stuttgart 30(DE)**

(54) **Vermittlungssystem mit einem Digital-Koppelnetz und teilnehmerseitige Anschusseinheit hierfür.**

(57) Durch die Erfindung wird es ermöglicht, daß Teilnehmer mit Sprachendgeräten (77) und Datenendgeräten (24) mittels einer teilnehmerseitigen Anschlußeinheit (22) über eine Teilnehmeranschlußleitung (44) und ein Anschlußteil (12) an ein Digital-Koppelnetz (14) angeschlossen sind. Datenverbindungen, die aus einzelnen Datenpaketen bestehen, werden vom Anschlußteil (12) über eine Daten-Verbindungsleitung - (16) direkt zum Digital-Koppelnetz (14) geführt, während Sprachverbindungen in zeitmultiplexer Form über eine Sprach-Verbindungsleitung (18) und eine Zugangseinheit - (20) zum Digital-Koppelnetz (14) geführt werden. Datenverbindungen, die im kontinuierlichen Datenstrom einen Zeitmultiplexkanal ausfüllen, werden wie Sprachverbindungen behandelt.

FIG. 1

0 193 134

## Vermittlungssystem mit einem Digital-Koppelnetz und teilnehmerseitige Anschlußeinheit hierfür

Die Erfindung betrifft ein Vermittlungssystem mit einem Digital-Koppelnetz nach dem Oberbegriff des Hauptanspruchs und eine teilnehmerseitige Anschlußeinheit hierfür.

Ein solches Vermittlungssystem ist u.a. in der Zeitschrift "Elektrisches Nachrichtenwesen", Bd. 56, Heft 2/3, 1981, als System 12 der ITT beschrieben.

Datenverarbeitende Geräte sind heute schon in das kleinste Büro eingekehrt. Um möglichst viel Nutzen aus diesen Geräten zu ziehen, ist es erforderlich, sie mit bestehenden und zukünftigen Sprachgeräten und Geräten mit sprachähnlichem Verhalten (Modems) in Verbindung zu bringen. Indem Sprach-und Datendienste in ein gemeinsames System integriert werden, ergibt sich eine solche Möglichkeit. Dabei sind einem Teilnehmer all diejenigen Dienste zugänglich, die er braucht, ohne daß er hierfür besondere Ausrüstung benötigt.

Will ein Anwender eine Vermittlungsstelle für integrierten Sprach-und Datenverkehr einrichten, dann stehen meist die folgenden Fragen im Vordergrund: die Anzahl der anzuschließenden Teilnehmer, die bereitzustellenden Dienste, die zu erwartende Verkehrsbelastung. Diese Fragen sind wichtig, da die bekannten Systeme zur Vermittlung von Sprache und Daten nach diesen Gesichtspunkten ausgelegt sind und die spätere Änderung bei auch nur einem dieser Faktoren zur Umrüstung des gesamten Systems führt. Eine solche Umrüstung ist sowohl teuer als auch zeitaufwendig.

Ein Grund für eine solche aufwendige Umrüstung liegt darin, daß die meisten bekannten Systeme mit einer zentralen Steuerung ausgerüstet sind. Wenn dann die Kapazität dieser zentralen Steuerung ausgeschöpft ist, dann ist das System für alle Teilnehmer vermindert leistungsfähig. Ein weiterer Nachteil eines solchen Systems mit zentraler Steuerung liegt darin, daß der Ausfall eines zentralen Teils immer das ganze System lähmt. Außerdem ist die zentrale Steuerung während der Hauptverkehrszeiten offensichtlich ein Engpaß.

Eine herkömmliche Lösung der Probleme, die sich aus einer völligen Zentralisierung ergeben, besteht darin, das System in einige Teilsysteme aufzuteilen und diese durch ein zentrales Koppelfeld miteinander zu verbinden. Dabei hat dann aber auch jedes Teilsystem wieder eine zentrale Steuerung, so daß die Probleme nur geringfügig reduziert werden.

Folglich muß jemand, der heute eine Vermittlungsstelle für integrierten Sprach-und Datenverkehr einrichten will, entweder diese Vermittlungsstelle sehr viel größer als für den heutigen Bedarf auslegen oder er muß damit rechnen, eines Tages aufwendige Umrüstungen durchführen zu müssen.

Der Erfindung liegt deshalb die Aufgabe zugrunde, das eingangs genannte Vermittlungssystem, das modular aufgebaut und dezentral gesteuert sein kann, so auszugestalten, daß darin Sprach-und Datendienste integriert und Teilnehmer mit Sprach-und Datenendgeräten angeschlossen sein können.

Diese Aufgabe wird gelöst durch ein Vermittlungssystem nach der Lehre des Hauptanspruchs sowie teilnehmerseitige Anschlußeinheiten nach der Lehre von Anspruch 7. Vorteilhafte Ausgestaltungen sind den Unteransprüchen und der Beschreibung zu entnehmen.

Durch die Erfindung wird es ermöglicht, daß Teilnehmer mit Sprachendgeräten und Datenendgeräten mittels einer teilnehmerseitigen Anschlußeinheit über eine Teilnehmeranschlußleitung und ein Anschlußteil an ein Digital-Koppelnetz angeschlossen sind. Datenverbindungen, die aus einzelnen Datenpaketen bestehen, werden vom Anschlußteil über eine Daten-Verbindungsleitung direkt zum Digital-Koppelnetz geführt, während Sprachverbindungen in zeitmultiplexer Form über eine Sprach-Verbindungsleitung und eine ·Zugangseinheit zum Digital-Koppelnetz geführt werden. Datenverbindungen, die im kontinuierlichen Datenstrom einen Zeitmultiplexkanal ausfüllen, werden wie Sprachverbindungen behandelt.

Im folgenden wird die Erfindung anhand eines Ausführungsbeispiels unter Zuhilfenahme der beiliegenden Zeichnung weiter erläutert.

Figur 1 zeigt ein Blockschaltbild eines Systems, das die Grundzüge der Erfindung trägt.

Figur 2 zeigt ein Blockschaltbild eines Anschlußteils und einer Zugangseinheit für das System nach Figur 1.

Figur 3 zeigt ein Blockschaltbild einer Leitungsabschluß-Baugruppe für das Anschlußteil nach Figur 2.

Figur 4 zeigt ein Blockschaltbild einer teilnehmerseitigen Anschlußeinheit für das System nach Figur 1.

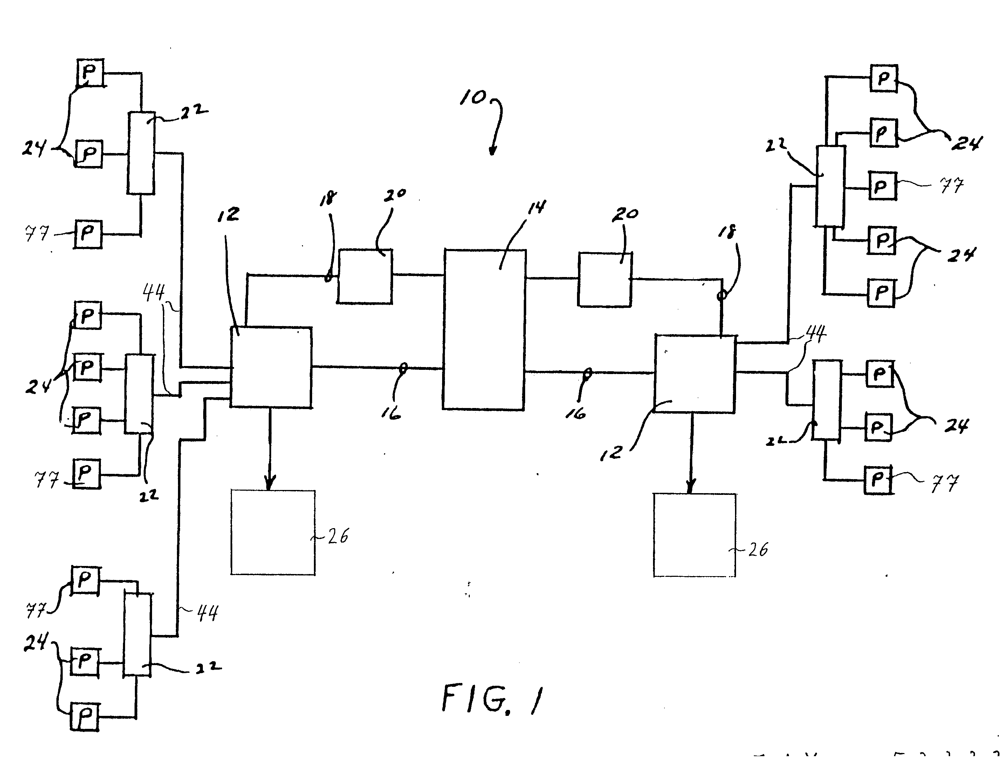

Figur 1 zeigt ein System 10, das die Grundzüge der Erfindung trägt. Es weist ein Digital-Koppelnetz 14 und daran angeschlossene Anschlußteile 12 auf. Figur 1 zeigt zwei solcher Anschlußteile 12, die je über zwei Verbindungsleitungen 16 und 18 mit dem Digital-Koppelnetz 12 verbunden sind. Die erste oder Daten-Verbindungsleitung 16 geht direkt zum Digital-Koppelnetz 12, die zweite oder Sprach-Verbindungsleitung 18 führt über eine Zugangseinheit 20. Weiter ist jedes Anschlußteil 12 über Teilnehmeranschlußleitungen 44 mit einer Mehrzahl teilnehmerseitiger Anschlußeinheiten 22 verbunden, an die jeweils Sprachendgeräte 77 und Datenendgeräte 24 angeschlossen sind. Die Anschlußteile 12 können auch mit Einrichtungen 26 verbunden sein, durch die den angeschlossenen Teilnehmern zusätzliche Dienste zugänglich gemacht werden. Solche Dienste können beispielsweise der elektronische Briefdienst, eine Datenverwaltung, andere Endgeräte oder der Anschluß an einen Rechner sein. Das Digital-Koppelnetz 14, die Anschlußteile 12 und die Zugangseinheiten 20 sowie gegebenenfalls weitere Anschlußteile und/oder Zugangseinheiten, die nicht dem erfindungsgemäßen Zweck dienen, bilden zusammen eine Vermittlungsstelle.

Vorzugsweise wird als Vermittlungsstelle eine solche des Typs System 12 der ITT verwendet. Eine Beschreibung ist in der Zeitschrift "Elektrisches Nachrichtenwesen", Band 56, Heft 2/3, 1981, zu finden. Darin ist beschrieben, wie ein Vermittlungssystem je nach erforderlicher Größe aus einer Vielzahl einzelner digitaler Koppelfelder aufgebaut ist, wobei jedes Koppelfeld für sich eine abgeschlossene Einheit bildet. Diese Ausführungsform ist mit verteilter Steuerung ausgerüstet; jedes Koppelfeld weist seine eigene Steuerung auf. Von einer Steuerung werden jeweils nur diejenigen Teile angesprochen, die an einer Verbindung zwischen zwei beliebigen Anschlußteilen 12 beteiligt sind. Es wird noch darauf hingewiesen, daß in der vorliegenden Anmeldung teilweise andere Bezeichnungen verwendet werden als in der obengenannten Zeitschrift. So wird die hier als Zugangseinheit 20 bezeichnete Baugruppe dort als Modulsteuereinheit bezeichnet und nur ein Teil dieser Baugruppe als Zugangseinheit. Die der Steuerung dienenden Teile dieser Baugruppe berühren aber nicht den Kern der vorliegenden Erfindung. Die Steuerung wird in dieser Anmeldung der einfacheren Verständlichkeit wegen den Anschlußteilen 12 zugerechnet.

Jedes Koppelfeld ist in der Lage, auf Anforderung durch ein Anschlußteil 12 einen Verbindungsweg aufzubauen. Die Aufforderung ergeht durch ein systemspezifisches Befehlsprotokoll. Die einzelnen Datenpakete bleiben auf ihrem Weg durch die Koppelfelder völlig unverändert. Die Anschlußteile 12 fügen einem zu vermittelnden Datenpaket jeweils Befehle bei, die den Weg durch die Koppelfelder steuern. Das Koppelnetz stellt die erforderlichen Verbindungswege zwischen den Anschlußteilen 12 her und entlastet die Anschlußteile 12 bei Wartung und Störfällen. Jedes Anschlußteil 12 ist jedoch für sich völlig autonom im Hinblick auf die Steuerung des Verkehrs, das Erkennen von Blockierungen usw.

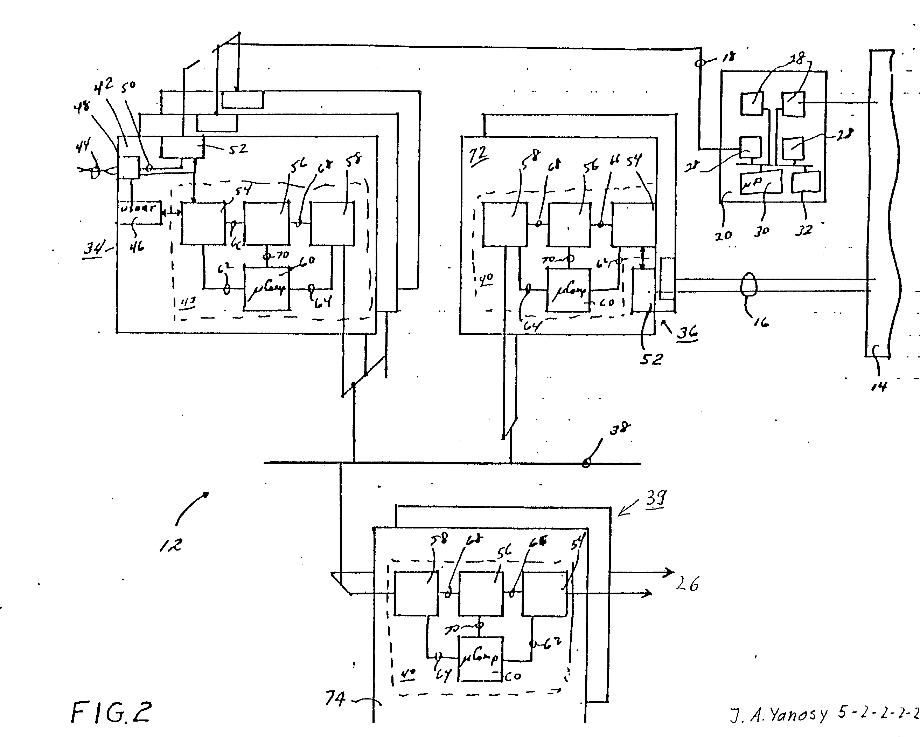

Im bevorzugten Ausführungsbeispiel weist die Daten-Verbindungsleitung 16 eines Anschlußteils 12 dreißig Paare von Simplexwegen, d.h. unidirektionalen Wegen auf, die im Zeitmultiplex zusammengefaßt sind. Damit können dreißig unabhängige Sendekanäle und dreißig unabhängige Empfangskanäle gleichzeitig Datenpakete senden und empfangen. Wie noch anhand der Fig. 2 näher erläutert wird, sind für diese dreißig Paare von Simplexwegen acht getrennte Schnittstellenbaugruppen vorhanden, wobei jede dieser Schnittstellenbaugruppen acht beliebige von jeweils dreißig zusammengehörigen Simplexwegen mit einer PCM-Verbindungsleitung verbinden kann. Jeweils zwei solcher PCM-Verbindungsleitungen sind mit einem Anschlußteil 12 verbunden und bilden zusammen die Daten-Verbindungsleitung 16.

Bei der in Figur 1 gezeigten Ausführungsform ist das Digital-Koppelnetz 14 mit Zugangseinheiten 20 verbunden. Eine Zugangseinheit 20 enthält, wie Fig. 2 zeigt, mehrere Ein-/Ausgangsschaltungen (Ports) 28, einen Mikroprozessor 30 und einen Speicher 32. Der Mikroprozessor 30 stellt mit Hilfe von Programmen und Informationen aus dem Speicher 32 Verbindungswege durch das Digital-Koppelnetz 14 her. In der vorliegenden Beschreibung wird das als Sprachweg, Sprachverbindung oder dergleichen bezeichnet, was über eine Zeitmultiplexverbindung läuft, während das als Datenweg, Datenverbindung oder dergleichen bezeichnet wird, was über einen Bus läuft, der im Anforderungs-oder Konkurrenzbetrieb (contention mode) betrieben wird. Da bei Sprachverbindungen die Information üblicherweise nicht paketweise übermittelt wird, sind hier zusätzliche Einrichtungen erforderlich, die den Verbindungsauf-und -abbau steuern und überwachen. Deshalb gehen Sprachverbindungen von einem Anschlußteil 12 zum Digital-Koppelnetz 14 über eine Zugangseinheit 20, während Datenverbindungen nicht über eine Zugangseinheit geführt werden müssen. Eine solche Anordnung ist vorteilhaft, weil bei Datenpaketverbindungen diejenige Information, die den Weg oder das Ziel angibt, vorzugsweise in einem Feld des Datenpakets selbst angegeben werden kann. Da Datenwege nur auf Anforderung aufgebaut werden, d.h. mittels virtueller Verbindungen, kann ein Datenweg wieder durch eine Information abgebaut werden, die in einem Feld des letzten Datenpakets enthalten ist.

Figur 2 zeigt den inneren Aufbau eines bereits in Figur 1 gezeigten Anschlußteils 12. Es enthält eine Anschlußeinheit für Sprach-und Datendienste 34, eine Anschlußeinheit für Datendienste 36 und einen Bus 38, der diese Anschlußeinheiten miteinander verbindet. Vorzugsweise ist eine Anschlußeinheit für zusätzliche Dienste 39 zum Anschluß der in Fig. 1 gezeigten zusätzlichen Einrichtungen 26 vorhanden und ebenfalls an den Bus 38 angeschlossen. Wie noch näher erklärt wird, enthalten die Anschlußeinheiten 34, 36 und 39 zum gemeinsamen Bus 38 hin Schnittstellenbausteine 40, die alle gleich aufgebaut sind, aber durch unterschiedliche Programmierung dem jeweiligen Anwendungsfall entsprechend unterschiedlich arbeiten. Das ganze System weist damit eine Architektur mit einer auf eine Vielzahl von Mikrocomputern verteilten Steuerung auf.

Vorzugsweise ist die Anschlußeinheit für Sprach-und Datendienste 34 aus einer Mehrzahl untereinander gleichen Schnittstellenbaugruppen für Sprach-und Datendienste 42 aufgebaut, die jeweils zum Anschluß von Sprach-und/oder Datenendgeräten über Teilnehmeranschlußleitungen 44, vorzugsweise Paare verdrillter Drähte, Lichtleitkabel oder dergleichen, vorgesehen sind. Jede Schnittstellenbaugruppe für Sprach-und Datendienste 42 enthält einen Schnittstellenbaustein 40, einen allgemein als USART (universal synchronous/asynchronous receiver/transmitter) bezeichneten Baustein 46, einen Schnittstellenbaustein 52 und einen Übertragungsbaustein 48. Der Übertragungsbaustein 48 führt unter anderem als Multiplexer in der einen Richtung Sprache und Daten zusammen und teilt sie in der Gegenrichtung.als Demultiplexer wieder auf. Der Baustein 46 - (USART) tauscht Daten zwischen dem Schnittstellenbaustein 40 und dem Übertragungsbaustein 48, während die Sprache über einen Sprachbus 50 zum Schnittstellenbaustein 52 und von dort zur Zugangseinheit 20 geht.

Der Schnittstellenbaustein 40 enthält einen Speicher 56, auf den gleichermaßen über einen Daten-und Adreßbus 68 von einer Busanschlußschaltung 58, über einen Daten-und Adreßbus 70 von einem Mikrocomputer 60 und über einen Daten-und Adreßbus 66 von einer Geräteanschlußschaltung 54 zugegriffen werden kann. Vorzugsweise besteht zwischen der Busanschlußschaltung 58 und der Geräteanschlußschaltung 54 einerseits und dem Mikrocomputer 60 andererseits je eine direkte Verbindung 64 bzw. 62, beispielsweise für Unterbrechungsanforderungen - (interrupt).

Der Bus 38 wird vorzugsweise im Anforderungs-oder Konkurrenzbetrieb (contention mode) betrieben, so daß alle angeschlossenen Busanschlußschaltungen 58 gleichberechtigt zugreifen können. Datenübertragung, Anforderungskollisions-Erkennung und Taktverteilung erfolgen voneinander getrennt.

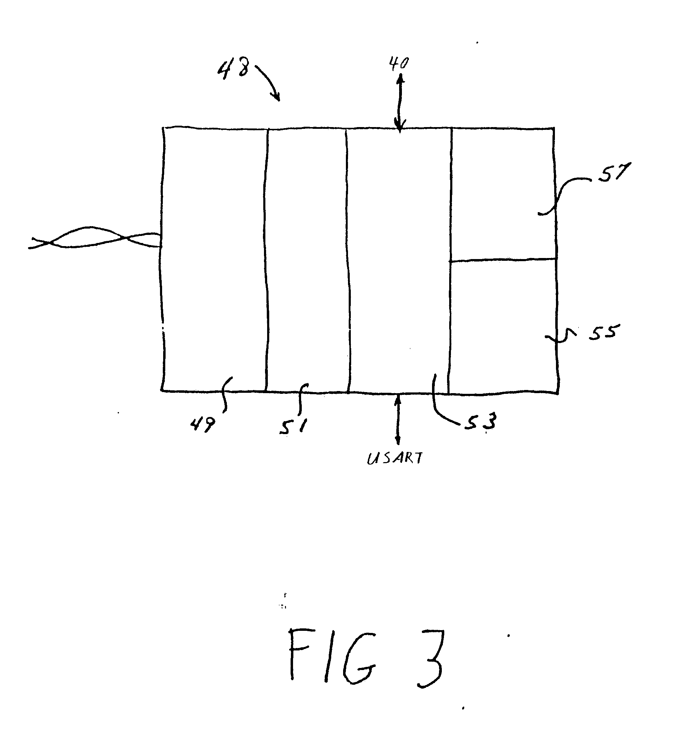

Figur 3 zeigt ein Blockschaltbild eines Übertragungsbausteins 48. Dieser enthält einen Leitungssatz 49, einen Codec 51, einen Betriebsartschalter 53, eine Anpaßschaltung 55 und eine Synchronisationsschaltung 57 zur Synchronisation der Anpaßschaltung 55.

Der Schnittstellenbaustein 52 ist in der Lage, beliebige Verbindungen zwischen den einzelnen Kanälen seiner Ein-und Ausgänge herzustellen. Er ist damit für die Herstellung von Sprachverbindungen zwischen einem Sprachendgerät und der zur Zugangseinheit 20 führenden Sprach-Verbindungsleitung 18 zuständig.

Die Anschlußeinheit für Datendienste 36 enthält mindestens eine Schnittstellenbaugruppe für Datendienste 72. Diese Schnittstellenbaugruppe enthält einerseits einen Schnittstellenbaustein 40 zum Bus 38 hin und andererseits einen Schnittstellenbaustein 52 zum Digital-Koppelnetz 14 hin. Beide sind direkt miteinander verbunden. Der Schnittstellenbaustein 40 zum Bus 38 hin erfüllt die gleichen Aufgaben wie der Schnittstellenbaustein 40 in der Schnittstellenbaugruppe für Sprach-und Datendienste 42. Er ist auch wie jener aufgebaut. Der Schnittstellenbaustein 52 zum Digital-Koppelnetz 14 hin ist ebenso aufgebaut wie der Schnittstellenbaustein 52 in der Schnittstellenbaugruppe für Sprach-und Datendienst 34.

Die Anschlußeinheit für zusätzliche Dienste 39 enthält, wenn vorhanden, mindestens eine Schnittstellenbaugruppe für zusätzliche Dienste 74. Der Aufbau einer Schnittstellenbaugruppe für zusätzliche Dienste hängt ab vom jeweils anzuschließenden Dienst. Der Datenfluß auf dem Bus 38 zwischen einzelnen Schnittstellenbaugruppen 42, 72 und 74 erfolgt nach einem bestimmten internen Datenprotokoll. Die Schnittstellenbaugruppen für zusätzliche Dienste 74 haben damit in erster Linie die Aufgabe der Protokollumsetzung zwischen internem Protokoll und dem Protokoll für den jeweiligen zusätzlichen Dienst. Sie enthalten hierzu einen Schnittstellenbaustein 40, wie er auch in den übrigen Schnittstellenbaugruppen 42 und 72 enthalten ist.

Vorzugsweise ist jedes Anschlußteil 12 aus steckbaren Leiterplatten aufgebaut. Jede Schnittstellenbaugruppe ist auf einer eigenen Leiterplatte aufgebaut. Die Leiterplatten sind in einem Baugruppenträger enthalten, der ebenfalls als Leiterplatte ausgeführt ist und der den Bus 38, beispielsweise in Form geätzter Leiterbahnen enthält. Jedes Anschlußteil 12 ist damit modular aufgebaut und kann mit geringen Investitionen weiter ausgebaut werden.

Jede in einem Anschlußteil 12 enthaltene Schnittstellenbaugruppe für Sprach-und Datendienste 42 ist über eine daran angeschlossene teilnehmerseitige Anschlußeinheit 22 mit einer Mehrzahl von Endgeräten 24 verbunden, die alle nach demselben Protokoll arbeiten. Unter anderem dadurch, daß im ganzen System überall derselbe Schnittstellenbaustein 40 für die Protokollverarbeitung eingesetzt ist, arbeitet auch das ganze System 10 bei Sprach-und Datenverbindungen nach einem einheitlichen Protokoll. Wenn Endgeräte 24, die mit verschiedenen Protokollen arbeiten, auch verschiedenen Schnittstellenbaugruppen für Sprach-und Datendienste 42 zugeordnet werden, dann ist die Zahl der erforderlichen Protokollkonversionen und auch der Protokollkonverter und damit auch die daraus resultierende Verkehrsbelastung gering.

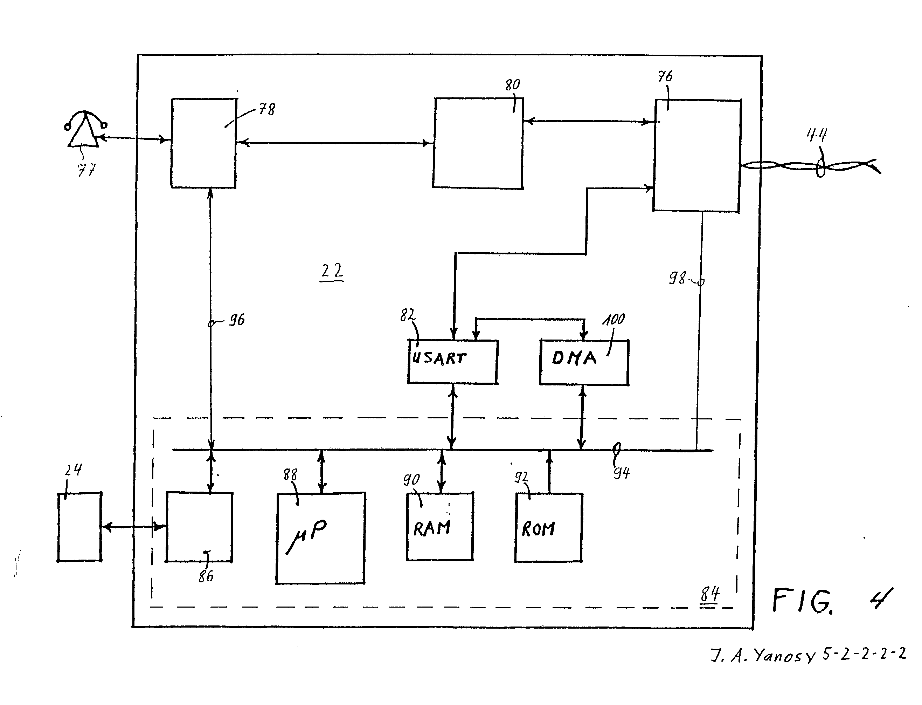

Anhand der Figur 4 wird nun eine Ausführungsform einer teilnehmerseitigen Anschlußeinheit 22 beschrieben. Diese enthält einen Übertragungsbaustein 76, der dem schon beschriebenen Übertragungsbaustein 48 entspricht. Ein angeschlossenes Sprachendgerät 77 ist mit dem Übertragungsbaustein 76 über einen handelsüblichen Codec 80 mit Filter und einen herkömmlichen Telefonanschlußbaustein 78 verbunden. Der Datenaustausch erfolgt über einen Baustein 82 (USART), der die Verbindung zu einem Mikrocomputer 84 herstellt. Der Mikrocomputer 84 weist einen Schnittstellenbaustein 86 zum Anschluß eines Datenendgerätes 24 auf. Vorzugsweise enthält der Mikrocomputer 84 einen Mikroprozessor 88, einen Schreib-Lese-Speicher 90 (RAM) und einen Nur-Lese-Speicher 92 (ROM), die durch einen Bus 94 miteinander verbunden sind. Der Mikrocomputer 84 verarbeitet alle in der teilnehmerseitigen Anschlußeinheit 22 anfallenden Daten, unter anderem den Datenaustausch zwischen dem Baustein 82 und dem Datenendgerät 24. Außerdem werden der Telefonanschlußbaustein 78 und der Betriebsartschalter im Übertragungsbaustein 76 vom Mikrocomputer 84 über Leitungen 96 bzw. 98 überwacht. Vorzugsweise enthält die teilnehmerseitige Anschlußeinheit 22 noch einen Direktzugriffsbaustein 110 (DMA), durch den der Baustein 82 einen schnellen Zugriff zu den gespeicherten Informationen erhält, ohne den Mikrocomputer 84 zu behindern.

**Ansprüche**

1. Vermittlungssystem (10) mit einem Digital-Koppelnetz (14) und mindestens einem Anschlußteil (12) mit einer zugehörigen Zugangseinheit (20), über die Verbindungen in zeitmultiplexer Form, die im folgenden als Sprachverbindungen bezeichnet werden, zwischen Anschlußteil (12) und Digital-Koppelnetz (14) geführt werden können, **dadurch gekennzeichnet,** daß eine Daten-Verbindungsleitung (16) das Anschlußteil (12) und das Digital-Koppelnetz (14) direkt verbindet, und daß über diese Daten-Verbindungsleitung (16) aus einzelnen Datenpaketen bestehende Verbindungen, die im folgenden als Datenverbindungen bezeichnet werden, geführt werden können.

2. Vermittlungssystem nach Anspruch 1, dadurch gekennzeichnet, daß das Anschlußteil (12) eine Anschlußeinheit für Sprach-und Datendienste (34), eine Anschlußeinheit für Datendienste (36) und einen die Anschlußeinheiten (34, 36) verbindenden Bus (38) aufweist, daß in der Anschlußeinheit für Sprach-und Datendienste (34) Übertragungsbausteine (48) zum Anschluß von Einrichtungen (22, 24, 77) für Endteilnehmer vorhanden sind, daß Sprachverbindungen eines Endteilnehmers von dem diesem Endteilnehmer zugeordneten Übertragungsbaustein (48) in der Anschlußeinheit für Sprach-und Datendienste (34) über eine Sprach-Verbindungsleitung (18) und die Zugangseinheit (20) zum Digital-Koppelnetz (14) geführt werden und daß Datenverbindungen dieses Endteilnehmers vom Übertragungsbaustein (48) in der Anschlußeinheit für Sprach-und Datendienste (34) über den Bus (38) zur Anschlußeinheit für Datendienste (36) und von dort über die Daten-Verbindungsleitung (16) zum Digital-Koppelnetz (14) geführt werden.

3. Vermittlungssystem nach Anspruch 2, dadurch gekennzeichnet, daß an den Bus (38) im Anschlußteil (12) eine Anschlußeinheit für zusätzliche Dienste (39) zum Anschluß einer zusätzlichen Einrichtung (26) angeschlossen ist und daß jede Verbindung zwischen einem Teilnehmer und einer zusätzlichen Einrichtung (26) über die Anschlußeinheit für Sprach-und Datendienste (34), den Bus (38) und die Anschlußeinheit für zusätzliche Dienste (39) geführt wird.

4. Vermittlungssystem nach Anspruch 2 oder 3, dadurch gekennzeichnet, daß die Anschlußeinheit für Sprach-und Datendienste (34) für jeden daran angeschlossenen Endteilnehmer eine Schnittstellenbaugruppe für Sprach-und Datendienste (42) mit einem Übertragungsbaustein (48) enthält, daß die Anschlußeinheit für Datendienste (36) für jede zum Digital-Koppelnetz (14) führende Daten-Verbindungsleitung (16) eine Schnittstellenbaugruppe für Datendienste (72) aufweist und daß die Anschlußeinheit für zusätzliche Dienste (39), wenn vorhanden, für jede angeschlossene zusätzliche Einrichtung (26) eine Schnittstellenbaugruppe für zusätzliche Dienste (74) aufweist.

5. Vermittlungssystem nach Anspruch 4, dadurch gekennzeichnet, daß jede Schnittstellenbaugruppe (42, 72, 74) einen Schnittstellenbaustein (40) enthält, über den die Verbindung zum gemeinsamen Bus (38) geführt wird und daß diese Schnittstellenbausteine (40) untereinander gleich sind.

6. Vermittlungssystem nach Anspruch oder 5, dadurch gekennzeichnet, daß jede Schnittstellenbaugruppe für Sprach-und Datendienste (42) einen Schnittstellenbaustein (52) enthält, über den die Verbindung zur Sprach-Verbindungsleitung (18) geführt wird, daß jede Schnittstellenbaugruppe für Datendienste (72) einen Schnittstellenbaustein (52) enthält, über den die Verbindung zur Daten-Verbindungsleitung (16) geführt wird und daß diese Schnittstellenbausteine (52) untereinander gleich sind.

7. Teilnehmerseitige Anschlußeinheit (22) zum Anschluß von Endgeräten (24, 77) eines Teilnehmers an das Vermittlungssystem (10) nach einem der Ansprüche 1 bis 6, dadurch gekennzeichnet, daß sie einen Telefonanschlußbaustein (78) zum Anschluß eines Sprachendgeräts (77), einen Schnittstellenbaustein (86) zum Anschluß wenigstens eines Daten-Endgeräts (24) und eine Einrichtung (76) zum Verbinden des vom Telefonanschlußbaustein (78) kommenden Sprachwegs mit dem vom Schnittstellenbaustein (86) kommenden Datenweg und zum Anschluß an eine Teilnehmeranschlußleitung (44) enthält.

8. Teilnehmerseitige Anschlußeinheit nach Anspruch 7, dadurch gekennzeichnet, daß die Einrichtung (76) ein Übertragungsbaustein ist, der den Übertragungsbausteinen (48) in der Anschlußeinheit für Sprach-und Datendienste (34) im wesentlichen gleicht.

9. Teilnehmerseitige Anschlußeinheit nach Anspruch 7 oder 8, dadurch gekennzeichnet, daß der Schnittstellenbaustein (86) Teil eines Mikrocomputers (84) ist.

FIG. 1

0 193 134

FIG.2

J. A. Yanosy 5-2-2-2-2

0 193 134

0 193 134

FIG 3

FIG. 4

22

78  80  76

77  44

98

96

82  100

USART  DMA

94

24  88  90  92

86  μP  RAM  ROM

84

0 193 134

J. A. Yanosy 5-2-2-2-2